# EUROPEAN PATENT APPLICATION

(11) **EP 4 324 700 A1**
(43) Date of publication of application: **21.02.2024**
(21) Application number: 23191295.7
(22) Date of filing: 14.08.2023
(51) Int. Cl.: B60Q 1/14, B60Q 1/18, B60Q 1/20, B62J 6/022, B62J 6/16

(54) **LIGHT SOURCE SWITCHING CONTROL APPARATUS AND LIGHT SOURCE SWITCHING CONTROL METHOD FOR STRADDLE-TYPE VEHICLE**

(30) Priority: 16.08.2022 TW 111130731
(71) Applicant: Yamaha Hatsudoki Kabushiki Kaisha, Iwata-shi, Shizuoka 438-8501 (JP)
(72) Inventor: Hsieh, Chin-Yu, Hukou Township, Hsinchu County 303 (TW); Chen, Yen-Fu, Hukou Township, Hsinchu County 303 (TW); Hsu, Fang-Yu, Hukou Township, Hsinchu County 303 (TW)
(74) Representative: Grünecker Patent- und Rechtsanwälte PartG mbB

(57) **Abstract**

Provided is a light source switching control apparatus (1) for a straddle-type vehicle, including: a vehicle lighting unit (2), including a plurality of light sources (21, 22) having different color temperature values; a light source switching element (3) configured to be operated by a rider to set the light source (21, 22) to be selected and generate a light source signal value corresponding to the selected light source (21, 22); a vehicle status detecting unit (4) configured to detect statuses of the vehicle and generate at least one type of vehicle status information; and an electronic control unit (5) connected to the vehicle lighting unit (2) and configured to receive the light source signal value from the light source switching element (3) and the vehicle status information from the vehicle status detecting unit (4), wherein the electronic control unit (5) determines whether to output a light source command corresponding to the light source signal value to the vehicle lighting unit (2) based on the vehicle status information, whereby whether to make the selected light source (21, 22) emit light is controlled.

## Description

The present invention relates to a light source switching control apparatus and a light source switching control method, in particular to a light source switching control apparatus and a light source switching control method for a straddle-type vehicle.

Conventionally, vehicles such as straddle-type vehicles are equipped with vehicle lamps having different functions, and the light source of each vehicle lamp may be turned on/off and controlled to switch so as to change a lighting status according to different driving environments, and thus, a clear front range of visibility is ensured.

Patent document 1 (Taiwan patent application publication No. 200413872) discloses a light source switching control apparatus, the light source switching control apparatus detects intensity change of ambient light by using an ambient light intensity detecting apparatus, and sends out a light source switching signal according to the intensity change of the ambient light, and thus, the vehicle lamps are automatically controlled to switch between two light emission statuses.

Patent document 1: Taiwan patent application publication No. 200413872.

### [Problems to be solved by the present invention]

Generally, front view clarity experienced by a rider varies depending on driving road conditions. For example, when the rider drives in a mountain region, a foggy region, a rainy region, or the like, the front view clarity experienced by the rider will be reduced. Therefore, it is desirable to select a proper light source to improve the front view clarity so as to improve visibility.

If a light source with a higher color temperature (such as a white light source) is used as a light source for lighting in the region where the view clarity is reduced due to the poor weather, illuminance may be poor since white light with a higher color temperature has a poor penetrating power in rain fog,. On the other hand, a low-color-temperature light source has better penetrating power, the front view clarity of the rider can be improved so as to increase front visibility. Therefore, in the region where the view clarity is reduced due to the poor weather, it is preferable to select a light source with a lower color temperature (such as a yellow light source) as a light source for lighting.

During driving, it is desirable to perform switching control on the vehicle lamps appropriately according to the road conditions so as to select a light source suitable for the light emission status of the environment from a plurality of light sources in different light emission statuses for lighting.

For example, as described above, according to the light source switching control apparatus of patent document 1, switching control between light emission statuses is automatically performed during driving.

However, change in view clarity experienced by the rider is felt differently depending on riders, and when the switching control between the light emission statuses is automatically performed, a circumstance that the switching control does not meet the expectations of the rider may be caused.

In addition, in the region where the view clarity is reduced due to the poor weather, the view clarity experienced by the rider is low, so that the response time for the rider to the road conditions ahead is short, and if the switching control between the light emission statuses (for example, switching control between light sources having different color temperatures) is automatically performed suddenly during driving, it is difficult for the rider to adapt to change in the view clarity in a short time, and then, front visibility of the rider cannot be immediately improved.

Besides, when the switching control between the light emission statuses is automatically performed suddenly during driving, a rider in an opposite vehicle may be bothered.

In addition, in the automatic light source switching control apparatus as disclosed in patent document 1, since the number of electronic components for completing circuit logic operation required for automatic light source switching is large and assembling is complicated, and thus a large heat dissipation space is required. Therefore, the design of a space in the vehicle may be restricted, and miniaturization of the front part of the vehicle and improvement of the degree of freedom in designing the vehicle lamps are not facilitated.

The present invention is provided in view of the above circumstances, and an objective thereof is to provide a light source switching control apparatus and a light source switching control method for a straddle-type vehicle, in which operation autonomy of switching control to light sources by the rider can be improved, the front visibility of the rider during driving is ensured, and the miniaturization of the front part of the vehicle and the degree of freedom in designing the vehicle lamps can be improved.

### [Technical solutions for the problems]

To solve the above problems, a light source switching control apparatus having the features of claim 1 and a method having the features of claim 10 are provided. A light source switching control apparatus for a straddle-type vehicle of the present disclosure includes: a vehicle lighting unit, including a plurality of light sources having different color temperature values; a light source switching element configured to be operated by a rider to set the light source to be selected and generate a light source signal value corresponding to the selected light source; a vehicle status detecting unit configured to detect statuses of the vehicle and generate at least one type of vehicle status information; and an electronic control unit connected to the vehicle lighting unit and configured to receive the light source signal value from the light source switching element and the vehicle status information from the vehicle status detecting unit, where the electronic control unit determines whether to output a light source command corresponding to the light source signal value to the vehicle lighting unit based on the vehicle status information, whereby it is controlled whether to make the selected light source emit light.

According to the above embodiment, in the light source switching control apparatus for a straddle-type vehicle of the present invention, the rider can personally operate the light source switching element to set the light source to be selected from the plurality of light sources having different color temperature values, and the light source switching element generates a light source signal value corresponding to the selected light source. Then, the electronic control unit determines whether to output the light source command corresponding to the light source signal value to the vehicle lighting unit based on the vehicle status information detected by the vehicle status detecting unit, whereby it is controlled whether to make the light source selected by the rider emit light.

According to the light source switching control apparatus for a straddle-type vehicle of the present invention, the rider personally controls switching of the light sources manually, therefore, the rider can personally operate to perform switching control of the vehicle lamps according to perceived view clarity, and then the operation autonomy of switching control to the light sources by the rider is enhanced.

Besides, switching of the light sources is manually controlled by the rider personally, so that alertness of the rider during driving in the region where view clarity is reduced due to poor weather can be improved, the rider can respond to the road conditions ahead with a sufficient time during driving, and then can adapt to change of the view clarity more quickly, and thus, the front visibility during driving can be ensured.

In addition, in the light source switching control apparatus for a straddle-type vehicle of the present invention, the electronic control unit receives the vehicle status information detected by the vehicle status detecting unit, and determines whether to output the light source command corresponding to the light source signal value to the vehicle lighting unit based on the vehicle status information, whereby it is controlled whether to make the light source selected by the rider emit light. That is, even if the rider operates the light source switching element, the light source selected by the rider may emit light only when the electronic control unit determines that the light source command corresponding to the light source signal value can be outputted to the vehicle lighting unit based on the vehicle status information. In this case, it is necessary to satisfy a specific vehicle status condition to switch on the light source selected by the rider to emit light, and thus, the circumstance that switching control between the light emission statuses is automatically performed suddenly during driving to cause trouble of a rider in an opposite vehicle can be avoided.

In addition, as described above, according to the light source switching control apparatus for a straddle-type vehicle of the present invention, the rider personally controls switching of the light sources manually, so the purpose may be achieved only by arranging a few parts of the apparatus without complicated assembling or large heat dissipation space, the miniaturization of the front part of the vehicle is facilitated, and furthermore, the degree of freedom in designing the vehicle lamps may be increased.

As described above, the light source switching control apparatus for a straddle-type vehicle can be provided by the present invention, in which the operation autonomy of switching control to the light sources by the rider can be improved, the front visibility during driving is ensured, and the miniaturization of the front part of the vehicle and the degree of freedom in designing the vehicle lamps can be improved.

Preferably, in the light source switching control apparatus for a straddle-type vehicle of the present invention, the vehicle status information is status information of a power unit, when the status information of the power unit describes a status where the power unit stops providing driving force, the electronic control unit outputs the light source command corresponding to the light source signal value to the vehicle lighting unit, whereby the selected light source emits light, and when the status information of the power unit describes a status where the power unit provides the driving force, the electronic control unit does not output the light source command corresponding to the light source signal value.

In this case, the electronic control unit may output the light source command corresponding to the light source signal value to the vehicle lighting unit only in the status where the power unit stops providing the driving force, and thus, the light source selected by the rider emits light. That is, even if the rider operates the light source switching element, the light source selected by the rider may emit light only in the status where the power unit stops providing the driving force. In this case, the alertness of the rider during driving in the region where the view clarity is reduced due to the poor weather can be improved, so that the rider can respond to the road conditions ahead with a sufficient time during driving, and can adapt to the change of the view clarity more quickly. In addition, the circumstance that switching control between the light emission statuses is automatically performed suddenly during driving to cause trouble of a rider in an opposite vehicle can be avoided. Thus, while the operation autonomy of switching control to the light sources by the rider, the miniaturization of the front part of the vehicle and the degree of freedom in designing the vehicle lamps are improved, the front visibility during driving is further ensured.

Preferably, in the light source switching control apparatus for a straddle-type vehicle of the present invention, the power unit is a fuel engine.

In this case, the electronic control unit may output the light source command corresponding to the light source signal value to the vehicle lighting unit only in the status where the fuel engine stops providing the driving force, and thus, the light source selected by the rider emits light. That is, even if the rider operates the light source switching element, the light source selected by the rider may emit light only in the status where the fuel engine stops providing the driving force. In this case, the alertness of the rider during driving in the region where the view clarity is reduced due to the poor weather can be improved, so that the rider can respond to the road conditions ahead with a sufficient time during driving, and can adapt to the change of the view clarity more quickly. In addition, the circumstance that switching control between the light emission statuses is automatically performed suddenly during driving to cause trouble of a rider in an opposite vehicle can be avoided. Thus, while the operation autonomy of switching control to the light sources by the rider, the miniaturization of the front part of the vehicle and the degree of freedom in designing the vehicle lamps are improved, the front visibility during driving is further ensured.

Preferably, in the light source switching control apparatus for a straddle-type vehicle of the present invention, the power unit is an electric engine.

In this case, the electronic control unit may output the light source command corresponding to the light source signal value to the vehicle lighting unit only in the status where the electric engine stops providing the driving force, and thus, the light source selected by the rider emits light. That is, even if the rider operates the light source switching element, the light source selected by the rider may emit light only in the status where the electric engine stops providing the driving force. In this case, the alertness of the rider during driving in the region where the view clarity is reduced due to the poor weather can be improved, so that the rider can respond to the road conditions ahead with a sufficient time during driving, and can adapt to the change of the view clarity more quickly. In addition, the circumstance that switching control between the light emission statuses is automatically performed suddenly during driving to cause trouble of a rider in an opposite vehicle can be avoided. Thus, while the operation autonomy of switching control to the light sources by the rider, the miniaturization of the front part of the vehicle and the degree of freedom in designing the vehicle lamps are improved, the front visibility during driving is further ensured.

Preferably, in the light source switching control apparatus for a straddle-type vehicle of the present invention, the electronic control unit includes a plurality of light source driving apparatuses, the electronic control unit starts the light source driving apparatus corresponding to the selected light source based on the received light source signal value from the light source switching element, when the status information of the power unit describes a status where the power unit stops providing the driving force, the started light source driving apparatus outputs the light source command corresponding to the light source signal value to the vehicle lighting unit, whereby the selected light source emits light, and when the status information of the power unit describes a status where the power unit provides the driving force, the started light source driving apparatus does not output the light source command corresponding to the light source signal value.

In this case, the started light source driving apparatus corresponding to the selected light source in the electronic control unit may output the light source command corresponding to the light source signal value to the vehicle lighting unit only in the status where the power unit stops providing the driving force, and thus, the light source selected by the rider emits light. That is, even if the rider operates the light source switching element, the light source selected by the rider may emit light only in the status where the power unit stops providing the driving force. In this case, the alertness of the rider during driving in the region where the view clarity is reduced due to the poor weather can be improved, so that the rider can respond to the road conditions ahead with a sufficient time during driving, and can adapt to the change of the view clarity more quickly. In addition, the circumstance that switching control between the light emission statuses is automatically performed suddenly during driving to cause trouble of a rider in an opposite vehicle can be avoided. Thus, while the operation autonomy of switching control to the light sources by the rider, the miniaturization of the front part of the vehicle and the degree of freedom in designing the vehicle lamps are improved, the front visibility during driving is further ensured.

Preferably, in the light source switching control apparatus for a straddle-type vehicle of the present invention, the vehicle status information is vehicle speed status information, when the vehicle speed status information describes a status where vehicle speed is zero, the electronic control unit outputs the light source command corresponding to the light source signal value to the vehicle lighting unit, whereby the selected light source emits light, and when the vehicle speed status information describes a status where the vehicle speed is not zero, the electronic control unit does not output the light source command corresponding to the light source signal value.

In this case, the electronic control unit may output the light source command corresponding to the light source signal value to the vehicle lighting unit only in the status where the vehicle speed is zero, and thus, the light source selected by the rider emits light. That is, even if the rider operates the light source switching element, the light source selected by the rider may emit light only in the status where the vehicle speed is zero. In this case, the alertness of the rider during driving in the region where the view clarity is reduced due to the poor weather can be improved, so that the rider can respond to the road conditions ahead with a sufficient time during driving, and can adapt to the change of the view clarity more quickly. In addition, the circumstance that switching control between the light emission statuses is automatically performed suddenly during driving to cause trouble of a rider in an opposite vehicle can be avoided. Thus, while the operation autonomy of switching control to the light sources by the rider and the miniaturization of the front part of the vehicle and the degree of freedom in designing the vehicle lamps are improved, the front visibility during driving is further ensured.

Preferably, in the light source switching control apparatus for a straddle-type vehicle of the present invention, the electronic control unit includes a plurality of light source driving apparatuses, the electronic control unit starts the light source driving apparatus corresponding to the selected light source based on the received light source signal value from the light source switching element, when the vehicle speed status information describes a status where the vehicle speed is zero, the started light source driving apparatus outputs the light source command corresponding to the light source signal value to the vehicle lighting unit, whereby the selected light source emits light, and when the vehicle speed status information describes a status where the vehicle speed is not zero, the started light source driving apparatus does not output the light source command corresponding to the light source signal value.

In this case, the started light source driving apparatus corresponding to the selected light source in the electronic control unit may output the light source command corresponding to the light source signal value to the vehicle lighting unit only in the status where the vehicle speed is zero, and thus, the light source selected by the rider emits light. That is, even if the rider operates the light source switching element, the light source selected by the rider may emit light only in the status where the vehicle speed is zero. In this case, the alertness of the rider during driving in the region where the view clarity is reduced due to the poor weather can be improved, so that the rider can respond to the road conditions ahead with a sufficient time during driving, and can adapt to the change of the view clarity more quickly. In addition, the circumstance that switching control between the light emission statuses is automatically performed suddenly during driving to cause trouble of a rider in an opposite vehicle can be avoided. Thus, while the operation autonomy of switching control to the light sources by the rider, the miniaturization of the front part of the vehicle and the degree of freedom in designing the vehicle lamps are improved, the front visibility during driving is further ensured.

Preferably, in the light source switching control apparatus for a straddle-type vehicle of the present invention, the plurality of light sources having different color temperature values include: at least one high-color-temperature light source, the color temperature value thereof exceeding 4500K; and at least one low-color-temperature light source, the color temperature value thereof being 4500K or less.

In this case, the rider can perform switching between a high-color-temperature light source and a low-color-temperature light source, the high-color-temperature light source is used in a common driving environment, and the low-color-temperature light source is used in a driving environment where the view clarity is reduced due to the poor weather. Therefore, a light source with the lower color temperature (such as a yellow light source) may be used as a light source for lighting even in the driving environment where the view clarity is reduced due to the poor weather, so as to improve the view clarity. Thus, while the operation autonomy of switching control to the light sources by the rider, the miniaturization of the front part of the vehicle and the degree of freedom in designing the vehicle lamps are improved, the front visibility during driving is further ensured.

Preferably, a color temperature difference between the high-color-temperature light source and the low-color-temperature light source is 2000K or more.

In this case, the rider can perform switching between the high-color-temperature light source and the low-color-temperature light source with a large color temperature difference, the high-color-temperature light source is used in the common driving environment, and the low-color-temperature light source is used in the driving environment where the view clarity is reduced due to the poor weather. Therefore, a light source with the lower color temperature (such as a yellow light source) may be used as a light source for lighting even in the driving environment where the view clarity is reduced due to the poor weather, so as to improve the view clarity. Thus, while the operation autonomy of switching control to the light sources by the rider, the miniaturization of the front part of the vehicle and the degree of freedom in designing the vehicle lamps are improved, the front visibility during driving is further ensured.

To solve the above problems, a light source switching control method for a straddle-type vehicle of the present invention performs light source switching control on the vehicle lighting unit including the plurality of light sources having different color temperature values, the light source switching control method includes: a light source switching step, setting the light source to be selected by the rider to generate the light source signal value corresponding to the selected light source; a vehicle status detecting step, detecting statuses of the vehicle and generating at least one type of vehicle status information; a light source command outputting determining step, determining whether to output a light source command corresponding to the light source signal value to the vehicle lighting unit based on the vehicle status information; and a light source emitting step, making the selected light source emit light when the vehicle lighting unit receives the light source command.

In this case, in the light source switching control method for a straddle-type vehicle of the present invention, the rider personally sets the light source to be selected from the plurality of light sources having different color temperature values, so as to generate the light source signal value corresponding to the selected light source. Then, whether to output the light source command corresponding to the light source signal value to the vehicle lighting unit is determined according to the detected vehicle status information, and thus, the light source selected by the rider emits light.

According to the light source switching control method for a straddle-type vehicle of the present invention, the rider personally controls switching of the light sources manually, therefore, the rider can personally operate to perform switching control of the vehicle lamps according to perceived view clarity, and then the operation autonomy of switching control to the light sources by the rider is enhanced.

Besides, switching of the light sources is manually controlled by the rider personally, so that alertness of the rider during driving in the region where view clarity is reduced due to poor weather can be improved, the rider can respond to the road conditions ahead with a sufficient time during driving, and then can adapt to change of the view clarity more quickly, and thus, the front visibility during driving can be ensured.

In addition, in the light source switching control method for a straddle-type vehicle of the present invention, whether to output the light source command corresponding to the light source signal value to the vehicle lighting unit is determined according to the detected vehicle status information, and thus, the light source selected by the rider emits light. That is, even if the rider operates the light source switching element, the light source selected by the rider may emit light only when the electronic control unit determines that the light source command corresponding to the light source signal value can be outputted to the vehicle lighting unit based on the vehicle status information. In this case, it is necessary to satisfy a specific vehicle status to switch on the light source selected by the rider to emit light, and thus, the circumstance that switching control between the light emission statuses is automatically performed suddenly during driving to cause trouble of a rider in an opposite vehicle can be avoided, and the front visibility during driving is ensured.

In addition, as described above, according to the light source switching control method for a straddle-type vehicle of the present invention, the rider personally controls switching of the light sources manually, so the purpose may be achieved only by arranging a few parts of the light source switching control apparatus for the vehicle without complicated assembling or large heat dissipation space, the miniaturization of the front part of the vehicle is facilitated, and furthermore, the degree of freedom in designing the vehicle lamps may be increased.

Preferably, in the light source switching control method for a straddle-type vehicle of the present invention, the vehicle status information is status information of a power unit, and in the light source command outputting determining step, when the status information of the power unit describes the status where the power unit stops providing the driving force, the light source command is outputted to the vehicle lighting unit, and when the status information of the power unit describes the status where the power unit provides the driving force, the light source command is not outputted to the vehicle lighting unit.

In this case, the light source command corresponding to the light source signal value may be outputted to the vehicle lighting unit only in the status where the power unit stops providing the driving force, and thus, the light source selected by the rider emits light. That is, even if the rider switches the light sources, the light source selected by the rider may emit light only in the status where the power unit stops providing the driving force. In this case, the alertness of the rider during driving in the region where the view clarity is reduced due to the poor weather can be improved, so that the rider can respond to the road conditions ahead with a sufficient time during driving, and can adapt to the change of the view clarity more quickly. In addition, the circumstance that switching control between the light emission statuses is automatically performed suddenly during driving to cause trouble of a rider in an opposite vehicle can be avoided. Thus, while the operation autonomy of switching control to the light sources by the rider, the miniaturization of the front part of the vehicle and the degree of freedom in designing the vehicle lamps are improved, the front visibility during driving is further ensured.

Preferably, in the light source switching control method for a straddle-type vehicle of the present invention, the power unit is a fuel engine.

In this case, the light source command corresponding to the light source signal value may be outputted to the vehicle lighting unit only in the status where the fuel engine stops providing the driving force, and thus, the light source selected by the rider emits light. That is, even if the rider switches the light sources, the light source selected by the rider may emit light only in the status where the fuel engine stops providing the driving force. In this case, the alertness of the rider during driving in the region where the view clarity is reduced due to the poor weather can be improved, so that the rider can respond to the road conditions ahead with a sufficient time during driving, and can adapt to the change of the view clarity more quickly. In addition, the circumstance that switching control between the light emission statuses is automatically performed suddenly during driving to cause trouble of a rider in an opposite vehicle can be avoided. Thus, while the operation autonomy of switching control to the light sources by the rider, the miniaturization of the front part of the vehicle and the degree of freedom in designing the vehicle lamps are improved, the front visibility during driving is further ensured.

Preferably, in the light source switching control method for a straddle-type vehicle of the present invention, the power unit is an electric engine.

In this case, the light source command corresponding to the light source signal value may be outputted to the vehicle lighting unit only in the status where the electric engine stops providing the driving force, and thus, the light source selected by the rider emits light. That is, even if the rider switches the light sources, the light source selected by the rider may emit light only in the status where the electric engine stops providing the driving force. In this case, the alertness of the rider during driving in the region where the view clarity is reduced due to the poor weather can be improved, so that the rider can respond to the road conditions ahead with a sufficient time during driving, and can adapt to the change of the view clarity more quickly. In addition, the circumstance that switching control between the light emission statuses is automatically performed suddenly during driving to cause trouble of a rider in an opposite vehicle can be avoided. Thus, while the operation autonomy of switching control to the light sources by the rider, the miniaturization of the front part of the vehicle and the degree of freedom in designing the vehicle lamps are improved, the front visibility during driving is further ensured.

Preferably, in the light source switching control method for a straddle-type vehicle of the present invention, the vehicle status information is vehicle speed status information, and in the light source command outputting determining step, when the vehicle speed status information describes a status where the vehicle speed is zero, the light source command corresponding to the light source signal value is outputted to the vehicle lighting unit, whereby the selected light source emits light, and when the vehicle speed status information describes a status where the vehicle speed is not zero, the light source command corresponding to the light source signal value is not outputted.

In this case, the light source command corresponding to the light source signal value may be outputted to the vehicle lighting unit only in the status where the vehicle speed is zero, and thus, the light source selected by the rider emits light. That is, even if the rider switches the light sources, the light source selected by the rider may emit light only in the status where the vehicle speed is zero. In this case, the alertness of the rider during driving in the region where the view clarity is reduced due to the poor weather can be improved, so that the rider can respond to the road conditions ahead with a sufficient time during driving, and can adapt to the change of the view clarity more quickly. In addition, the circumstance that switching control between the light emission statuses is automatically performed suddenly during driving to cause trouble of a rider in an opposite vehicle can be avoided. Thus, while the operation autonomy of switching control to the light sources by the rider, the miniaturization of the front part of the vehicle and the degree of freedom in designing the vehicle lamps are improved, the front visibility during driving is further ensured.

Preferably, in the light source switching control method for a straddle-type vehicle of the present invention, the plurality of light sources having different color temperature values include: at least one high-color-temperature light source, the color temperature value thereof exceeding 4500K; and at least one low-color-temperature light source, the color temperature value thereof being 4500K or less.

In this case, the rider can perform switching between a high-color-temperature light source and a low-color-temperature light source, the high-color-temperature light source is used in a common driving environment, and the low-color-temperature light source is used in a driving environment where the view clarity is reduced due to the poor weather. Therefore, a light source with the lower color temperature (such as a yellow light source) may be used as a light source for lighting even in the driving environment where the view clarity is reduced due to the poor weather, so as to improve the view clarity. Thus, while the operation autonomy of switching control to the light sources by the rider, the miniaturization of the front part of the vehicle and the degree of freedom in designing the vehicle lamps are improved, the front visibility during driving is further ensured.

Preferably, in the light source switching control method for a straddle-type vehicle of the present invention, a color temperature difference between the high-color-temperature light source and the low-color-temperature light source is 2000K or more.

In this case, the rider can perform switching between the high-color-temperature light source and the low-color-temperature light source with a large color temperature difference, the high-color-temperature light source is used in the common driving environment, and the low-color-temperature light source is used in the driving environment where the view clarity is reduced due to the poor weather. Therefore, a light source with the lower color temperature (such as a yellow light source) may be used as a light source for lighting even in the driving environment where the view clarity is reduced due to the poor weather, so as to improve the view clarity. Thus, while the operation autonomy of switching control to the light sources by the rider, the miniaturization of the front part of the vehicle and the degree of freedom in designing the vehicle lamps are improved, the front visibility during driving is further ensured.
FIG. 1 is a block diagram of a light source switching control apparatus according to an embodiment of the present invention.
FIG. 2 (A) is a rear view of a part of a straddle-type vehicle 1. FIG. 2 (B) is an enlarged rear view of a part of an operating handle 11R on the right side of a straddle-type vehicle 10. FIG. 2 (C) is an enlarged top view of a part of an operating handle 11L on the left side of the straddle-type vehicle 10.
FIG. 3 is a block diagram of a light source switching control method according to an embodiment of the present invention.
FIG. 4 is a flow chart of the light source switching control method according to an embodiment of the present invention.
FIGS. 5 (A) to (D) are schematic diagrams illustrating switching of lighting modes of a head lamp by the light source switching control apparatus according to an embodiment of the present invention.
FIG. 6 is a block diagram of the light source switching control apparatus according to another embodiment of the present invention.
FIG. 7 is a flow chart of the light source switching control method according to another embodiment of the present invention.

Embodiments of the present invention will be described below with reference to the accompanying drawings. In the following description, the same or similar members are denoted by the same reference numerals, and the description of the members and the like which have been described once is appropriately omitted. In addition, the terms "left" and "right" as used herein refer to the left and right, respectively, as viewed from a rider seated in a straddle-type vehicle 10.

### Embodiment 1

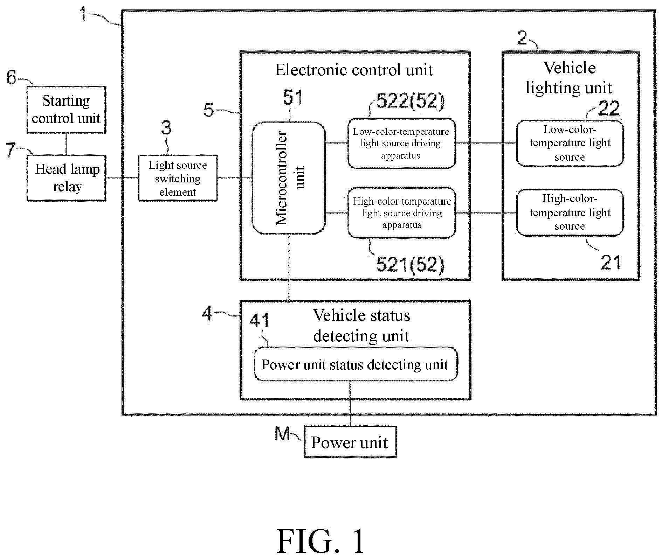

As shown in FIG. 1, a light source switching control apparatus 1 applied in this embodiment includes: a vehicle lighting unit 2, a light source switching element 3, a vehicle status detecting unit 4, and an electronic control unit 5.

The vehicle lighting unit 2 includes a plurality of light sources having different color temperature values. Specifically, the vehicle lighting unit 2 is a head lamp including a high beam and a low beam in the straddle-type vehicle 10. The low beam includes at least one high-color-temperature light source 21 and at least one low-color-temperature light source 22.

Preferably, the high-color-temperature light source 21 is a light source having a color temperature value exceeding 4500 K. More preferably, the high-color-temperature light source 21 is a light source having a color temperature value being 5500 K or more. Most preferably, the high-color-temperature light source 21 is a white light source.

Preferably, the low-color-temperature light source 22 is a light source having a color temperature value being 4500 K or less. More preferably, the low-color-temperature light source 22 is a light source having a color temperature value being 3500 K or less. Most preferably, the low-color-temperature light source 22 is a yellow light source.

Preferably, a color temperature difference between the high-color-temperature light source 21 and the low-color-temperature light source 22 is 2000 K or more. More preferably, the color temperature difference between the high-color-temperature light source 21 and the low-color-temperature light source 22 is 3000 K or more.

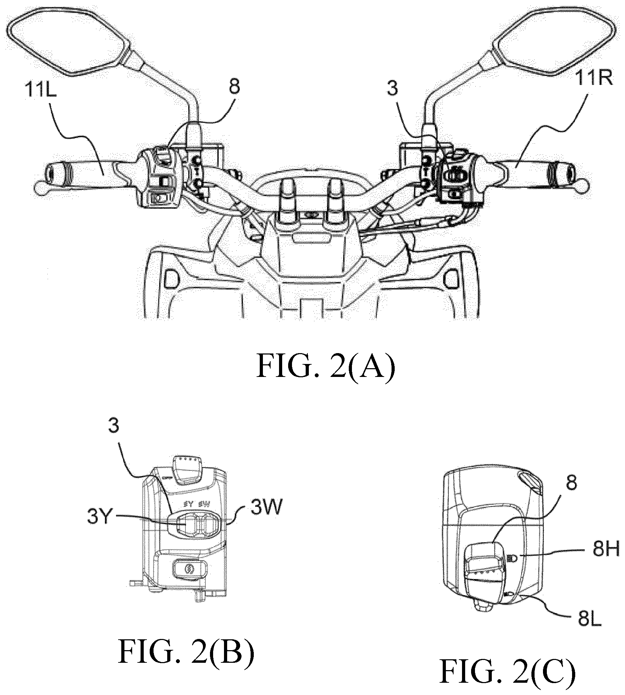

In addition, the light source switching element 3 may be operated by the rider to set low beams to be selected having different color temperatures. As shown in FIG. 2(A), in this embodiment, the light source switching element 3 is a color temperature changeover switch mounted on an operating handle 11R on the right side of the straddle-type vehicle 10. As shown in FIG. 2(A), the light source switching element 3 has a first position 3W and a second position 3Y, the first position 3W is a position where the light source switching element 3 is in a state that the high-color-temperature light source 21 is started, and the second position 3Y is a position where the light source switching element 3 is in a state that the low-color-temperature light source 22 is started. That is, in this embodiment, the low beams to be selected having different color temperatures may be set by reciprocating switching of the light source switching element 3 between the position where the high-color-temperature light source 21 is started and the position where the low-color-temperature light source 22 is started.

In addition, the light source switching element 3 may generate a light source signal value corresponding to the selected light source. Specifically, as shown in FIG. 1, in this embodiment, a starting control unit 6 configured to control starting of the vehicle is connected to the light source switching control apparatus 1 via a head lamp relay 7. More specifically, the starting control unit 6 is connected to the light source switching element 3 via the head lamp relay 7. When the vehicle starts, the starting control unit 6 may start the head lamp relay 7 and the light source switching element 3. At this time, the light source switching element 3 may generate a light source signal value corresponding to the selected low beam according to the low beam selected by operation of the rider. As shown in FIG. 1, in this embodiment, the light source switching element 3 is connected to the electronic control unit 5, and the generated light source signal value may be transmitted to the electronic control unit 5. Specifically, the light source switching element 3 may be connected to a microcontroller unit (MCU) 51 of the electronic control unit 5. In addition, the light source switching element 3 may transmit the generated light source signal value to the microcontroller unit 51.

In addition, the vehicle status detecting unit 4 may detect statuses of the vehicle, in particular, motion statuses of the vehicle. Specifically, as shown in FIG. 1, in this embodiment, the vehicle status detecting unit 4 includes a power unit status detecting unit 41 configured to detect statuses of a power unit M. In this embodiment, the power unit M may be a fuel engine or an electric engine. The power unit M may generate driving force, and the driving force is transmitted to wheels via a power transmission mechanism. The power unit status detecting unit 41 is connected to the power unit M so that it is detected whether the power unit M provides the driving force.

In addition, the vehicle status detecting unit 4 may generate at least one type of vehicle status information. In this embodiment, the vehicle status detecting unit 4 may generate status information of the power unit M based on the status, detected by the power unit status detecting unit 41, of the power unit M.

As shown in FIG. 1, in this embodiment, the vehicle status detecting unit 4 is connected to the electronic control unit 5, and the vehicle status information may be transmitted to the electronic control unit 5. Specifically, the vehicle status detecting unit 4 may be connected to the microcontroller unit 51 of the electronic control unit 5. In addition, the vehicle status detecting unit 4 may transmit the status information of the power unit M to the microcontroller unit 51.

In addition, the electronic control unit 5 may be connected to the vehicle lighting unit 2. The electronic control unit 5 includes a plurality of light source driving apparatuses 52, and the plurality of light source driving apparatuses 52 are respectively connected to the plurality of light sources having different color temperature values in the vehicle lighting unit 2. Specifically, as shown in FIG. 1, in this embodiment, the plurality of light source driving apparatuses 52 in the electronic control unit 5 include: a high-color-temperature light source driving apparatus 521 and a low-color-temperature light source driving apparatus 522. The high-color-temperature light source driving apparatus 521 is connected to the high-color-temperature light source 21 of the vehicle lighting unit 2. The low-color-temperature light source driving apparatus 522 is connected to the low-color-temperature light source 22 of the vehicle lighting unit 2.

In addition, as described above, the light source switching element 3 is connected to the electronic control unit 5, and may transmit the generated light source signal value to the electronic control unit 5. In other words, the electronic control unit 5 may receive the light source signal value from the light source switching element 3. In addition, as described above, the vehicle status detecting unit 4 is connected to the electronic control unit 5, and may transmit the vehicle status information to the electronic control unit 5. In other words, the electronic control unit 5 may receive the vehicle status information from the vehicle status detecting unit 4.

In addition, the electronic control unit 5 determines whether to output a light source command corresponding to the light source signal value to the vehicle lighting unit 2 based on the vehicle status information, whereby it is controlled whether to make the selected light source emit light. Specifically, in this embodiment, the microcontroller unit 51 of the electronic control unit 5 may receive the light source signal value from the light source switching element 3 and the status information from the power unit M of the vehicle status detecting unit 4. When the status information of the power unit M describes a status where the power unit M stops providing the driving force, the electronic control unit 5 outputs the light source command corresponding to the light source signal value to the vehicle lighting unit 2, whereby the selected light source emits light. When the status information of the power unit M describes a status where the power unit M provides the driving force, the electronic control unit 5 does not output the light source command corresponding to the light source signal value to the vehicle lighting unit 2.

Specifically, in this embodiment, the electronic control unit 5 starts the light source driving apparatus 52 corresponding to the selected light source based on the received light source signal value from the light source switching element 3. Then, when the status information of the power unit M describes the status where the power unit M stops providing the driving force, the started light source driving apparatus 52 outputs the light source command corresponding to the light source signal value to the vehicle lighting unit 2, whereby the selected light source emits light. When the status information of the power unit M describes the status where the power unit M provides the driving force, the started light source driving apparatus 52 does not output the light source command corresponding to the light source signal value to the vehicle lighting unit 2.

Specifically, in this embodiment, as described above, the light source switching element 3 may generate a light source signal value corresponding to the selected low beam according to the low beam selected by operation of the rider. For example, when the light source switching element 3 is switched to the first position 3W, namely the position where the high-color-temperature light source 21 is started, the light source switching element 3 generates a light source signal value corresponding to the high-color-temperature light source 21, and transmits the light source signal value to the microcontroller unit 51 of the electronic control unit 5, and the microcontroller unit 51 starts the high-color-temperature light source driving apparatus 521 corresponding to the high-color-temperature light source 21 based on the light source signal value corresponding to the high-color-temperature light source 21. Then, when the status information of the power unit M describes the status where the power unit M stops providing the driving force, the started high-color-temperature light source driving apparatus 521 outputs the light source command corresponding to the light source signal value to the vehicle lighting unit 2, whereby the high-color-temperature light source 21 emits light. When the status information of the power unit M describes the status where the power unit M provides the driving force, the started light source driving apparatus 52 does not output the light source command corresponding to the light source signal value to the vehicle lighting unit 2, whereby the high-color-temperature light source 21 does not emit light.

Here, when the vehicle lighting unit 2 receives the light source command outputted from the started high-color-temperature light source driving apparatus 521, the low-color-temperature light source 22 may be closed at first, and then the high-color-temperature light source 21 emits light. In other words, after the low-color-temperature light source 22 is closed, the high-color-temperature light source 21 then emits light after a delay time elapses. Preferably, the delay time is 500 milliseconds.

On the other hand, when the light source switching element 3 is switched to the second position 3Y, namely the position where the low-color-temperature light source 22 is started, the light source switching element 3 generates a light source signal value corresponding to the low-color-temperature light source 22, and transmits the light source signal value to the microcontroller unit 51 of the electronic control unit 5, and the microcontroller unit 51 starts the low-color-temperature light source driving apparatus 522 corresponding to the low-color-temperature light source 22 based on the light source signal value corresponding to the low-color-temperature light source 22. Then, when the status information of the power unit M describes the status where the power unit M stops providing the driving force, the started low-color-temperature light source driving apparatus 522 outputs the light source command corresponding to the light source signal value to the vehicle lighting unit 2, whereby the low-color-temperature light source 22 emits light. When the status information of the power unit M describes the status where the power unit M provides the driving force, the started low-color-temperature light source driving apparatus 522 does not output the light source command corresponding to the light source signal value to the vehicle lighting unit 2, whereby the low-color-temperature light source 22 does not emit light.

Here, when the vehicle lighting unit 2 receives the light source command outputted from the started low-color-temperature light source driving apparatus 522, the high-color-temperature light source 21 may be closed at first, and then the low-color-temperature light source 22 emits light. In other words, after the high-color-temperature light source 21 is closed, the low-color-temperature light source 22 then emits light after a delay time elapses. Preferably, the delay time is 500 milliseconds.

Then, the light source switching control method of this embodiment is described.

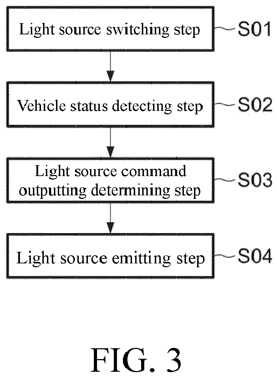

The light source switching control method of this embodiment is a light source switching control method for performing light source switching control on the vehicle lighting unit 2 including the plurality of light sources have different color temperature values. As shown in FIG. 3, the light source switching control method of this embodiment includes the following steps: a light source switching step S01, a vehicle status detecting step S02, a light source command outputting determining step S03, and a light source emitting step S04.

First, the light source switching step S01 is performed, the rider sets a light source to be selected, and a light source signal value corresponding to the selected light source is generated. Specifically, in the light source switching step S01, the rider operates the light source switching element 3 to set the light source to be selected. As described above, in this embodiment, the high-color-temperature light source 21 and the low-color-temperature light source 22 in the low beam serve as the light sources to be selected.

Then, the vehicle status detecting step S02 is performed, the statuses of the vehicle are detected, and at least one type of vehicle status information is generated. Specifically, in this embodiment, according to the vehicle status detecting step S02, the status of the power unit M is detected, and the status information of the power unit M is generated.

Then, the light source command outputting determining step S03 is performed, and whether to output the light source command corresponding to the light source signal value to the vehicle lighting unit 2 is determined based on the vehicle status information. Specifically, in this embodiment, in the light source command outputting determining step S03, when the status information of the power unit M describes the status where the power unit M stops providing the driving force, the light source command is outputted to the vehicle lighting unit 2, and when the status information of the power unit M describes the status where the power unit M provides the driving force, the light source command is not outputted to the vehicle lighting unit 2.

Finally, the light source emitting step S04 is performed, and when the vehicle lighting unit 2 receives the light source command, the selected light source emits light.

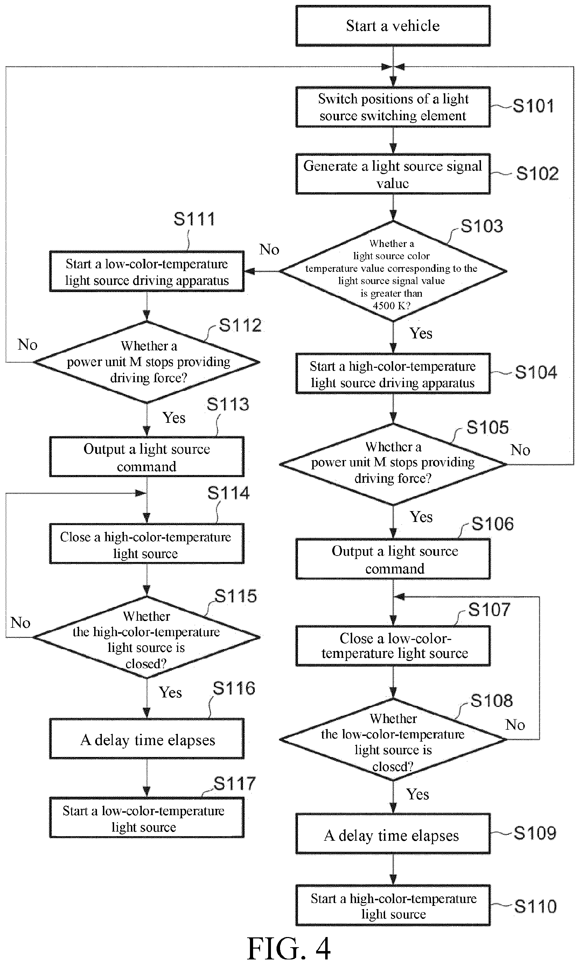

Specifically, the control logic of the light source switching control method of this embodiment is described with reference to FIG. 4. First, in a status of starting of the vehicle, in step S101, the rider switches the position of the light source switching element 3 to set the low beam to be switched (the high-color-temperature light source 21 or the low-color-temperature light source 22). Then, in step S102, a light source signal value corresponding to the low beam selected to be switched is generated.

Then, in step S103, when the microcontroller unit 51 of the electronic control unit 5 determines that the received light source signal value from the light source switching element 3 is a light source signal value corresponding to the high-color-temperature light source 21 (yes in step S103), the process proceeds to step S104, and the high-color-temperature light source driving apparatus 521 is started.

Then, step S105 is performed, and it is determined whether the status information of the power unit M describes a status where the power unit M stops providing the driving force. In step S105, when the microcontroller unit 51 of the electronic control unit 5 determines that the received status information of the power unit M from the vehicle status detecting unit 4 describes the status where the power unit M stops providing the driving force (yes in step S105), step S106 is performed, and the started high-color-temperature light source driving apparatus 521 outputs the light source command corresponding to the light source signal value to the vehicle lighting unit 2. When the microcontroller unit 51 of the electronic control unit 5 determines that the received status information of the power unit M from the vehicle status detecting unit 4 describes the status where the power unit M provides the driving force (no in step S105), the started high-color-temperature light source driving apparatus 521 does not output the light source command corresponding to the light source signal value to the vehicle lighting unit 2, and the process returns to step S101.

After step S106, step S107 is performed, and the low-color-temperature light source 22 is closed.

Then, step S108 is performed, and whether the low-color-temperature light source 22 is actually closed is determined. When it is determined that the low-color-temperature light source 22 is actually closed (yes in step S108), step S109 is performed, and a delay time (for example, 500 milliseconds) elapses to wait for the light color to be changed. When it is determined that the low-color-temperature light source 22 is not actually closed (no in step S108), then the process returns to step S107.

After step S109, step S110 is performed, the high-color-temperature light source 21 is started, and then the high-color-temperature light source 21 emits light to complete switching of the light sources.

In step S103, when the microcontroller unit 51 of the electronic control unit 5 determines that the received light source signal value from the light source switching element 3 is not the light source signal value corresponding to the high-color-temperature light source 21 (no in step S103), it is determined that the light source signal value from the light source switching element 3 is the light source signal value corresponding to the low-color-temperature light source 22, the process proceeds to step S111, and the low-color-temperature light source driving apparatus 522 is started.

Then, step S112 is performed, and it is determined whether the status information of the power unit M describes a status where the power unit M stops providing the driving force. In step S112, when the microcontroller unit 51 of the electronic control unit 5 determines that the received status information of the power unit M from the vehicle status detecting unit 4 describes the status where the power unit M stops providing the driving force (yes in step S112), step S113 is performed, and the started low-color-temperature light source driving apparatus 522 outputs the light source command corresponding to the light source signal value to the vehicle lighting unit 2. When the microcontroller unit 51 of the electronic control unit 5 determines that the received status information of the power unit M from the vehicle status detecting unit 4 describes the status where the power unit M provides the driving force (no in step S112), the started low-color-temperature light source driving apparatus 522 does not output the light source command corresponding to the light source signal value to the vehicle lighting unit 2, and the process returns to step S101.

After step S113, step S114 is performed, and the high-color-temperature light source 21 is closed.

Then, step S115 is performed, and whether the high-color-temperature light source 21 is actually closed is determined. When it is determined that the high-color-temperature light source 21 is actually closed (yes in step S115), step S116 is performed, and a delay time (for example, 500 milliseconds) elapses to wait for the light color to be changed. When it is determined that the high-color-temperature light source 21 is not actually closed (no in step S115), then the process returns to step S114.

After step S116, step S117 is performed, the low-color-temperature light source 21 is started, and then the low-color-temperature light source 21 emits light to complete switching of the light sources.

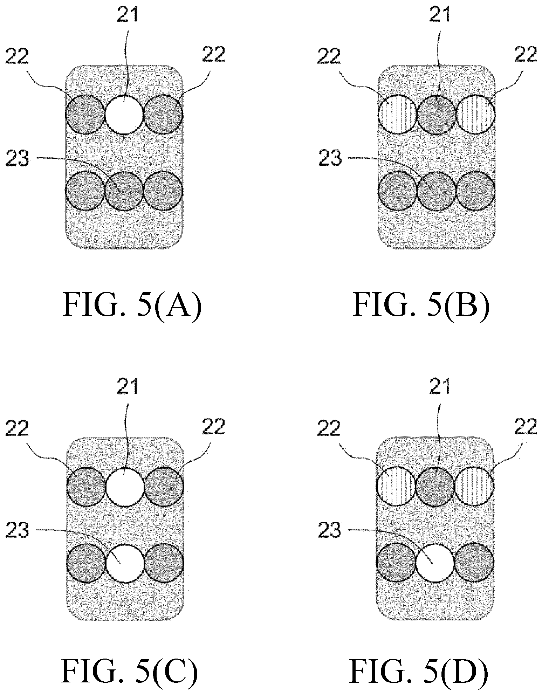

Then, switching of lighting modes of a head lamp by the light source switching control apparatus according to this embodiment is described with reference to FIGS. 2 (A) to (C) and FIGS. 5 (A) to (D). As shown in FIGS. 5(A) to (D), in this embodiment, the low beam includes a high-color-temperature light source 21 and two low-color-temperature light sources 22. In addition, as shown in FIG. 2(A), in this embodiment, except for the light source switching element 3 as the color temperature changeover switch on the operating handle 11R on the right side of the straddle-type vehicle 10, the operating handle 11L on the left side of the straddle-type vehicle 10 has a high beam and low beam switching element 8. As shown in FIG. 2(C), the high beam and low beam switching element 8 has a first position 8H and a second position 8L, the first position 8H is a position where the high beam and low beam switching element 8 is in a high beam mode, and the second position 8L is a position where the high beam and low beam switching element 8 is in a low beam mode. That is, in this embodiment, by reciprocating switching of the high beam and low beam switching element 8 between the position in the high beam mode and the position in the low beam mode, a lighting mode to be selected is set.

When the high beam and low beam switching element 8 is switched to the second position 8L, as shown in FIG. 5(A), the high beam 23 configured at the center of the lower portion of the head lamp is closed. In addition, when switching of low beams having different color temperatures is controlled by the light source switching control apparatus of the present invention to make the high-color-temperature light source 21 to be started, only the high-color-temperature light source 21 configured at the center of the upper portion of the head lamp is made to be started. At this time, the head lamp is set to be in a high-color-temperature lighting mode of the low beam.

On the other hand, in a status where the high beam 23 is closed, when switching of the low beams having different color temperatures is controlled by the light source switching control apparatus of the present invention to make the low-color-temperature light source 22 to be started, as shown in FIG. 5(B), only the low-color-temperature light sources 22 configured on the left side and the right side of the upper portion of the head lamp are made to be started. At this time, the head lamp is set to be in a low-color-temperature lighting mode of the low beam.

When the high beam and low beam switching element 8 is switched to the first position 8H, as shown in FIG. 5(C), the high beam 23 configured at the center of the lower portion of the head lamp is started. In addition, when switching of the low beams having different color temperatures is controlled by the light source switching control apparatus of the present invention to make the high-color-temperature light source 21 to be started, the high-color-temperature light source 21 configured at the center of the upper portion of the head lamp is started. At this time, the head lamp is set to be in a high-color-temperature lighting mode of the high beam.

On the other hand, in a status where the high beam 23 is started, when switching of the low beams having different color temperatures is controlled by the light source switching control apparatus of the present invention to make the low-color-temperature light source 22 to be started, as shown in FIG. 5(D), the low-color-temperature light sources 22 configured on the left side and the right side of the upper portion of the head lamp are made to be started. At this time, the head lamp is set to be in a low-color-temperature lighting mode of the high beam.

### Embodiment 2

Difference between the light source switching control apparatus for a straddle-type vehicle of embodiment 2 and that of embodiment 1 lies in the vehicle status information detected by the vehicle status detecting unit. Hereinafter, a part of the description of the contents overlapping with embodiment 1 is omitted.

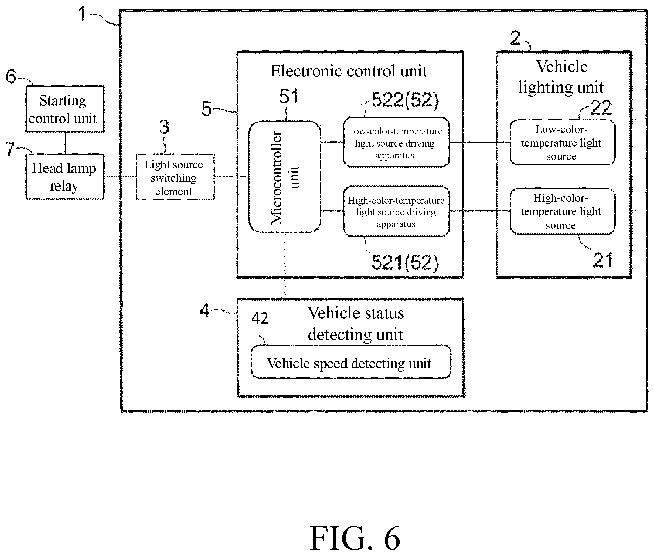

As shown in FIG. 6, the light source switching control apparatus 1 of this embodiment includes: the vehicle lighting unit 2, the light source switching element 3, the vehicle status detecting unit 4, and the electronic control unit 5. The configuration and the like of the vehicle lighting unit 2 and the light source switching element 3 are the same as those of embodiment 1, and therefore the description thereof is omitted. As shown in FIG. 6, in this embodiment, the starting control unit 6 configured to control starting of the vehicle is connected to the light source switching control apparatus 1 via the head lamp relay 7, as embodiment 1. More specifically, the starting control unit 6 is connected to the light source switching element 3 via the head lamp relay 7. When the vehicle starts, the starting control unit 6 may start the head lamp relay 7 and the light source switching element 3.

In addition, the vehicle status detecting unit 4 may detect statuses of the vehicle. Specifically, as shown in FIG. 6, in this embodiment, the vehicle status detecting unit 4 includes a vehicle speed detecting unit 42 configured to detect vehicle speed.

The vehicle status detecting unit 4 may generate at least one type of vehicle status information. In this embodiment, the vehicle status detecting unit 4 may generate vehicle speed status information according to the vehicle speed detected by the vehicle speed detecting unit 42.

As shown in FIG. 6, in this embodiment, the vehicle status detecting unit 4 is connected to the electronic control unit 5, and the vehicle status information may be transmitted to the electronic control unit 5. Specifically, the vehicle status detecting unit 4 may be connected to the microcontroller unit 51 of the electronic control unit 5. In addition, the vehicle status detecting unit 4 may transmit the vehicle speed status information to the microcontroller unit 51.

In addition, the electronic control unit 5 includes the plurality of light source driving apparatuses 52. The configuration of the light source driving apparatus 52, connection between the electronic control unit 5 and the vehicle lighting unit 2, and connection between the electronic control unit 5 and the light source switching element 3 are the same as those of embodiment 1, and therefore the description thereof is omitted.

In addition, as described above, the vehicle status detecting unit 4 is connected to the electronic control unit 5, and may transmit the vehicle status information to the electronic control unit 5. In other words, the electronic control unit 5 may receive the vehicle status information from the vehicle status detecting unit 4.

In addition, the electronic control unit 5 determines whether to output a light source command corresponding to the light source signal value to the vehicle lighting unit 2 based on the vehicle status information, whereby whether to make the selected light source emit light is controlled. Specifically, in this embodiment, the microcontroller unit 51 of the electronic control unit 5 may receive the light source signal value from the light source switching element 3 and the vehicle speed status information from the vehicle status detecting unit 4. When the vehicle speed status information describes a status where the vehicle speed is zero, the electronic control unit 5 outputs the light source command corresponding to the light source signal value to the vehicle lighting unit 2, whereby the selected light source emits light. When the vehicle speed status information describes a status where the vehicle speed is not zero, the electronic control unit 5 does not output the light source command corresponding to the light source signal value to the vehicle lighting unit 2.

In addition, the electronic control unit 5 starts the light source driving apparatus 52 corresponding to the selected light source based on the received light source signal value from the light source switching element 3. Then, when the vehicle speed status information describes the status where the vehicle speed is zero, the started light source driving apparatus 52 outputs the light source command corresponding to the light source signal value to the vehicle lighting unit 2, whereby the selected light source emits light. When the vehicle speed status information describes the status where the vehicle speed is not zero, the started light source driving apparatus 52 does not output the light source command corresponding to the light source signal value to the vehicle lighting unit 2.

Specifically, in this embodiment, when the light source switching element 3 is switched to the first position 3W, namely the position where the high-color-temperature light source 21 is started, the light source switching element 3 generates the light source signal value corresponding to the high-color-temperature light source 21, and transmits the light source signal value to the microcontroller unit 51 of the electronic control unit 5, and the microcontroller unit 51 starts the high-color-temperature light source driving apparatus 521 corresponding to the high-color-temperature light source 21 based on the light source signal value corresponding to the high-color-temperature light source 21. Then, when the vehicle speed status information describes the status where the vehicle speed is zero, the started high-color-temperature light source driving apparatus 521 outputs the light source command corresponding to the light source signal value to the vehicle lighting unit 2, whereby the high-color-temperature light source 21 emits light. When the vehicle speed status information describes the status where the vehicle speed is not zero, the started light source driving apparatus 52 does not output the light source command corresponding to the light source signal value to the vehicle lighting unit 2, whereby the high-color-temperature light source 21 does not emit light.

On the other hand, when the light source switching element 3 is switched to the second position 3Y, namely the position where the low-color-temperature light source 22 is started, the light source switching element 3 generates a light source signal value corresponding to the low-color-temperature light source 22, and transmits the light source signal value to the microcontroller unit 51 of the electronic control unit 5, and the microcontroller unit 51 starts the low-color-temperature light source driving apparatus 522 corresponding to the low-color-temperature light source 22 based on the light source signal value corresponding to the low-color-temperature light source 22. Then, when the vehicle speed status information describes the status where the vehicle speed is zero, the started low-color-temperature light source driving apparatus 522 outputs the light source command corresponding to the light source signal value to the vehicle lighting unit 2, whereby the low-color-temperature light source 22 emits light. When the vehicle speed status information describes a status where the vehicle speed is not zero, the started low-color-temperature light source driving apparatus 522 does not output the light source command corresponding to the light source signal value to the vehicle lighting unit 2, and thus, the low-color-temperature light source 22 does not emit light.

Here, light emission control of the high-color-temperature light source 21 or the low-color-temperature light source 22 performed by the vehicle lighting unit 2 after receiving the light source command is the same as that of embodiment 1, and therefore the description thereof is omitted.

Then, the light source switching control method of this embodiment is described.

As embodiment 1, the light source switching control method of this embodiment is a light source switching control method for performing light source switching control on the vehicle lighting unit 2 including a plurality of light sources having different color temperature values, and includes the following steps: the light source switching step S01, the vehicle status detecting step S02, the light source command outputting determining step S03, and the light source emitting step S04, and the steps are performed in the same order as that of embodiment 1 shown in FIG. 3.

First, the light source switching step S01 is performed. The configuration and the like of the light source switching step S01 are the same as those of embodiment 1, and therefore the description thereof is omitted.

Then, the vehicle status detecting step S02 is performed, the statuses of the vehicle are detected, and at least one type of vehicle status information is generated. Specifically, in this embodiment, according to the vehicle status detecting step S02, the vehicle speed is detected, and the vehicle speed status information is generated.

Then, the light source command outputting determining step S03 is performed, and it is determined whether to output the light source command corresponding to the light source signal value to the vehicle lighting unit 2 based on the vehicle status information. Specifically, in this embodiment, in the light source command outputting determining step S03, when the vehicle speed status information describes the status where the vehicle speed is zero, the light source command is outputted to the vehicle lighting unit 2, and when the vehicle speed status information describes the status where the vehicle speed is not zero, the light source command is not outputted to the vehicle lighting unit 2.

Finally, the light source emitting step S04 is performed. When the vehicle lighting unit 2 receives the light source command, the selected light source emits light.

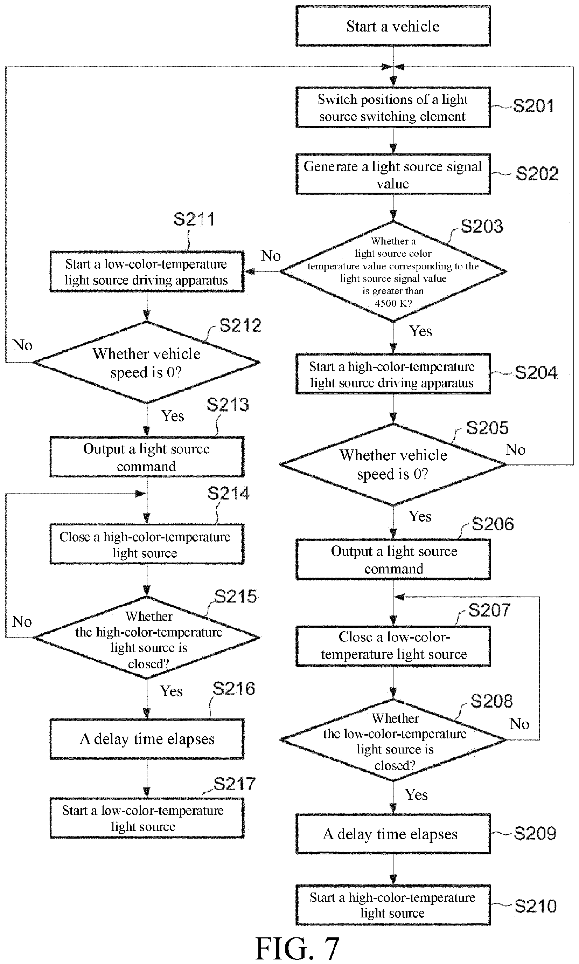

Specifically, the control logic of the light source switching control method of this embodiment is described with reference to FIG. 7. First, in a status of starting of the vehicle, in step 201, the rider switches the position of the light source switching element 3 to set the low beam to be switched (the high-color-temperature light source 21 or the low-color-temperature light source 22). Then, in step S202, a light source signal value corresponding to the low beam selected to be switched is generated.

Then, in step S203, when the microcontroller unit 51 of the electronic control unit 5 determines that the received light source signal value from the light source switching element 3 is a light source signal value corresponding to the high-color-temperature light source 21 (yes in step S203), the process proceeds to step S204, and the high-color-temperature light source driving apparatus 521 is started.

Then, step S205 is performed, and it is determined whether the vehicle speed status information describes the status where the vehicle speed is zero. In step S205, when the microcontroller unit 51 of the electronic control unit 5 determines that the received vehicle speed status information from the vehicle status detecting unit 4 describes the status where the vehicle speed is zero (yes in step S205), step S206 is performed, and the started high-color-temperature light source driving apparatus 521 outputs the light source command corresponding to the light source signal value to the vehicle lighting unit 2. When the microcontroller unit 51 of the electronic control unit 5 determines that the received vehicle speed status information from the vehicle status detecting unit 4 describes the status where the vehicle speed is not zero (no in step S205), the started high-color-temperature light source driving apparatus 521 does not output the light source command corresponding to the light source signal value to the vehicle lighting unit 2, and then the process returns to step S201.

After step S206, step S207 is performed, and the low-color-temperature light source 22 is closed.

Then, step S208 is performed, and it is determined whether the low-color-temperature light source 22 is actually closed. When it is determined that the low-color-temperature light source 22 is actually closed (yes in step S208), step S209 is performed, and a delay time (for example, 500 milliseconds) elapses to wait for the light color to be changed. When it is determined that the low-color-temperature light source 22 is not actually closed (no in step S208), then the process returns to step S207.

After step S209, step S210 is performed, the high-color-temperature light source 21 is started, and then the high-color-temperature light source 21 emits light to complete switching of the light sources.

In step S203, when the microcontroller unit 51 of the electronic control unit 5 determines that the received light source signal value from the light source switching element 3 is not the light source signal value corresponding to the high-color-temperature light source 21 (no in step S203), it is determined that the light source signal value from the light source switching element 3 is the light source signal value corresponding to the low-color-temperature light source 22, the process proceeds to step S211, and the low-color-temperature light source driving apparatus 522 is started.

Then, step S212 is performed, and it is determined whether the vehicle speed status information describes the status where the vehicle speed is zero. In step S212, when the microcontroller unit 51 of the electronic control unit 5 determines that the received vehicle speed status information from the vehicle status detecting unit 4 describes the status where the vehicle speed is zero (yes in step S212), step S113 is performed, and the started low-color-temperature light source driving apparatus 522 outputs the light source command corresponding to the light source signal value to the vehicle lighting unit 2. When the microcontroller unit 51 of the electronic control unit 5 determines that the received vehicle speed status information from the vehicle status detecting unit 4 describes the status where the vehicle speed is not zero (no in step S212), the started low-color-temperature light source driving apparatus 522 does not output the light source command corresponding to the light source signal value to the vehicle lighting unit 2, and then the process returns to step S201.

After step S213, step S214 is performed, and the high-color-temperature light source 21 is closed.

Then, step S215 is performed, and it is determined whether the high-color-temperature light source 21 is actually closed. When it is determined that the high-color-temperature light source 21 is actually closed (yes in step S215), step S216 is performed, and a delay time (for example, 500 milliseconds) elapses to wait for the light color to be changed. When it is determined that the high-color-temperature light source 21 is not actually closed (no in step S115), then the process returns to step S114.

After step S216, step S217 is performed, the low-color-temperature light source 21 is started, and then the low-color-temperature light source 21 emits light to complete switching of the light sources.

In addition, the light source switching control apparatus of this embodiment switches the lighting mode of the head lamp in the same manner as those of embodiment 1, and therefore the description thereof is omitted.

### Effects of embodiments

The light source switching control apparatus 1 for a straddle-type vehicle 10 of the present invention includes: the vehicle lighting unit 2, including the plurality of light sources having different color temperature values; the light source switching element 3 configured to be operated by the rider to set the light source to be selected and generate the light source signal value corresponding to the selected light source; the vehicle status detecting unit 4 configured to detect statuses of the vehicle and generate at least one type of vehicle status information; and the electronic control unit 5 connected to the vehicle lighting unit 2 and configured to receive the light source signal value from the light source switching element 3 and vehicle status information from the vehicle status detecting unit 4, where the electronic control unit 5 determines whether to output the light source command corresponding to the light source signal value to the vehicle lighting unit 2 based on the vehicle status information, whereby whether to make the selected light source emit light is controlled.

In this case, in the light source switching control apparatus 1 for a straddle-type vehicle 10 of the present invention, the rider can personally operate the light source switching element 3 to set the light source to be selected from the plurality of light sources having different color temperature values, and the light source switching element 3 generates the light source signal value corresponding to the selected light source. Then, the electronic control unit 5 determines whether to output the light source command corresponding to the light source signal value to the vehicle lighting unit 2 based on the vehicle status information detected by the vehicle status detecting unit 4, whereby it is controlled whether to make the light source selected by the rider emit light.

According to the light source switching control apparatus 1 for a straddle-type vehicle 10 of the present invention, the rider personally controls switching of the light sources manually, therefore, the rider can personally operate to perform switching control of the vehicle lamps according to perceived view clarity, and then the operation autonomy of switching control to the light source by the rider is enhanced.

Besides, switching of the light sources is manually controlled by the rider personally, so that the alertness of the rider during driving in a region where view clarity is reduced due to the poor weather can be improved, the rider can respond to the road conditions ahead with a sufficient time during driving, and then can adapt to change of the view clarity more quickly, and thus, the front visibility during driving can be ensured.

In addition, in the light source switching control apparatus 1 for a straddle-type vehicle 10 of the present invention, the electronic control unit 5 receives the vehicle status information detected by the vehicle status detecting unit 4, and determines whether to output the light source command corresponding to the light source signal value to the vehicle lighting unit 2 based on the vehicle status information, whereby it is controlled whether to make the light source selected by the rider emit light. That is, even if the rider operates the light source switching element 3, the light source selected by the rider may emit light only when the electronic control unit 5 determines that the light source command corresponding to the light source signal value can be outputted to the vehicle lighting unit 2 based on the vehicle status information. In this case, it is necessary to satisfy a specific vehicle status condition to switch on the light source selected by the rider to emit light, and thus, the circumstance that switching control between the light emission statuses is automatically performed suddenly during driving to cause trouble of a rider in an opposite vehicle can be avoided.

In addition, as described above, according to the light source switching control apparatus 1 for a straddle-type vehicle 10 of the present invention, the rider personally controls switching of the light sources manually, so the purpose may be achieved only by arranging a few parts of the apparatus without complicated assembling or large heat dissipation space, the miniaturization of the front part of the vehicle is facilitated, and furthermore, the degree of freedom in designing the vehicle lamps may be increased.

As described above, the light source switching control apparatus 1 for a straddle-type vehicle 10 can be provided by the present invention, the operation autonomy of switching control to the light sources by the rider can be improved, the front visibility during driving is ensured, and the miniaturization of the front part of the vehicle and the degree of freedom in designing the vehicle lamps can be improved.

Preferably, in the light source switching control apparatus 1 for a straddle-type vehicle 10 of the present invention, the vehicle status information is status information of a power unit M, when the status information of the power unit M describes the status where the power unit M stops providing the driving force, the electronic control unit 5 outputs the light source command corresponding to the light source signal value to the vehicle lighting unit 2, whereby the selected light source emits light, and when the status information of the power unit M describes the status where the power unit M provides the driving force, the electronic control unit 5 does not output the light source command corresponding to the light source signal value.

In this case, the electronic control unit 5 may output the light source command corresponding to the light source signal value to the vehicle lighting unit 2 only in the status where the power unit M stops providing the driving force, and thus, the light source selected by the rider emits light. That is, even if the rider operates the light source switching element 3, the light source selected by the rider may emit light only in the status where the power unit M stops providing the driving force. In this case, the alertness of the rider during driving in the region where the view clarity is reduced due to the poor weather can be improved, so that the rider can respond to the road conditions ahead with a sufficient time during driving, and can adapt to the change of the view clarity more quickly. In addition, the circumstance that switching control between the light emission statuses is automatically performed suddenly during driving to cause trouble of a rider in an opposite vehicle can be avoided. Thus, while the operation autonomy of switching control to the light sources by the rider, the miniaturization of the front part of the vehicle and the degree of freedom in designing the vehicle lamps are improved, the front visibility during driving is further ensured.

Preferably, in the light source switching control apparatus 1 for a straddle-type vehicle 10 of the present invention, the power unit M is a fuel engine.

In this case, the electronic control unit 5 may output the light source command corresponding to the light source signal value to the vehicle lighting unit 2 only in the status where the fuel engine stops providing the driving force, and thus, the light source selected by the rider emits light. That is, even if the rider operates the light source switching element 3, the light source selected by the rider may emit light only in the status where the fuel engine stops providing the driving force. In this case, the alertness of the rider during driving in the region where the view clarity is reduced due to the poor weather can be improved, so that the rider can respond to the road conditions ahead with a sufficient time during driving, and can adapt to the change of the view clarity more quickly. In addition, the circumstance that switching control between the light emission statuses is automatically performed suddenly during driving to cause trouble of a rider in an opposite vehicle can be avoided. Thus, while the operation autonomy of switching control to the light sources by the rider, the miniaturization of the front part of the vehicle and the degree of freedom in designing the vehicle lamps are improved, the front visibility during driving is further ensured.

Preferably, in the light source switching control apparatus 1 for a straddle-type vehicle 10 of the present invention, the power unit M is an electric engine.

In this case, the electronic control unit 5 may output the light source command corresponding to the light source signal value to the vehicle lighting unit 2 only in the status where the electric engine stops providing the driving force, and thus, the light source selected by the rider emits light. That is, even if the rider operates the light source switching element 3, the light source selected by the rider may emit light only in the status where the electric engine stops providing the driving force. In this case, the alertness of the rider during driving in the region where the view clarity is reduced due to the poor weather can be improved, so that the rider can respond to the road conditions ahead with a sufficient time during driving, and can adapt to the change of the view clarity more quickly. In addition, the circumstance that switching control between the light emission statuses is automatically performed suddenly during driving to cause trouble of a rider in an opposite vehicle can be avoided. Thus, while the operation autonomy of switching control to the light sources by the rider, the miniaturization of the front part of the vehicle and the degree of freedom in designing the vehicle lamps are improved, the front visibility during driving is further ensured.

Preferably, in the light source switching control apparatus 1 for a straddle-type vehicle 10 of the present invention, the electronic control unit 5 includes a plurality of light source driving apparatuses 52, the electronic control unit 5 starts the light source driving apparatus 52 corresponding to the selected light source based on the received light source signal value from the light source switching element 3, when the status information of the power unit M describes the status where the power unit M stops providing the driving force, the started light source driving apparatus 52 outputs the light source command corresponding to the light source signal value to the vehicle lighting unit 2, whereby the selected light source emits light, and when the status information of the power unit M describes the status where the power unit M provides the driving force, the started light source driving apparatus 52 does not output the light source command corresponding to the light source signal value.

In this case, the started light source driving apparatus 52 corresponding to the selected light source in the electronic control unit 5 may output the light source command corresponding to the light source signal value to the vehicle lighting unit 2 only in the status where the power unit M stops providing the driving force, and thus, the light source selected by the rider emits light. That is, even if the rider operates the light source switching element 3, the light source selected by the rider may emit light only in the status where the power unit M stops providing the driving force. In this case, the alertness of the rider during driving in the region where the view clarity is reduced due to the poor weather can be improved, so that the rider can respond to the road conditions ahead with a sufficient time during driving, and can adapt to the change of the view clarity more quickly. In addition, the circumstance that switching control between the light emission statuses is automatically performed suddenly during driving to cause trouble of a rider in an opposite vehicle can be avoided. Thus, while the operation autonomy of switching control to the light sources by the rider, the miniaturization of the front part of the vehicle and the degree of freedom in designing the vehicle lamps are improved, the front visibility during driving is further ensured.

Preferably, in the light source switching control apparatus 1 for a straddle-type vehicle 10 of the present invention, the vehicle status information is vehicle speed status information, when the vehicle speed status information describes the status where vehicle speed is zero, the electronic control unit 5 outputs the light source command corresponding to the light source signal value to the vehicle lighting unit 2, whereby the selected light source emits light, and when the vehicle speed status information describes the status where the vehicle speed is not zero, the electronic control unit 5 does not output the light source command corresponding to the light source signal value.

In this case, the electronic control unit 5 may output the light source command corresponding to the light source signal value to the vehicle lighting unit 2 only in the status where the vehicle speed is zero, and thus, the light source selected by the rider emits light. That is, even if the rider operates the light source switching element 3, the light source selected by the rider may emit light only in the status where the vehicle speed is zero. In this case, the alertness of the rider during driving in the region where the view clarity is reduced due to the poor weather can be improved, so that the rider can respond to the road conditions ahead with a sufficient time during driving, and can adapt to the change of the view clarity more quickly. In addition, the circumstance that switching control between the light emission statuses is automatically performed suddenly during driving to cause trouble of a rider in an opposite vehicle can be avoided. Thus, while the operation autonomy of switching control to the light sources by the rider, the miniaturization of the front part of the vehicle and the degree of freedom in designing the vehicle lamps are improved, the front visibility during driving is further ensured.

Preferably, in the light source switching control apparatus 1 for a straddle-type vehicle 10 of the present invention, the electronic control unit 5 includes a plurality of light source driving apparatuses 52, the electronic control unit 5 starts the light source driving apparatus 52 corresponding to the selected light source based on the received light source signal value from the light source switching element 3, when the vehicle speed status information describes the status where the vehicle speed is zero, the started light source driving apparatus 52 outputs the light source command corresponding to the light source signal value to the vehicle lighting unit 2, whereby the selected light source emits light, and when the vehicle speed status information describes the status where the vehicle speed is not zero, the started light source driving apparatus 52 does not output the light source command corresponding to the light source signal value.

In this case, the started light source driving apparatus 52 corresponding to the selected light source in the electronic control unit 5 may output the light source command corresponding to the light source signal value to the vehicle lighting unit 2 only in the status where the vehicle speed is zero, and thus, the light source selected by the rider emits light. That is, even if the rider operates the light source switching element 3, the light source selected by the rider may emit light only in the status where the vehicle speed is zero. In this case, the alertness of the rider during driving in the region where the view clarity is reduced due to the poor weather can be improved, so that the rider can respond to the road conditions ahead with a sufficient time during driving, and can adapt to the change of the view clarity more quickly. In addition, the circumstance that switching control between the light emission statuses is automatically performed suddenly during driving to cause trouble of a rider in an opposite vehicle can be avoided. Thus, while the operation autonomy of switching control to the light sources by the rider, the miniaturization of the front part of the vehicle and the degree of freedom in designing the vehicle lamps are improved, the front visibility during driving is further ensured.

Preferably, in the light source switching control apparatus 1 for a straddle-type vehicle 10 of the present invention, the plurality of light sources having different color temperature values include: at least one high-color-temperature light source 21, the color temperature value thereof exceeding 4500K; and at least one low-color-temperature light source 22, the color temperature value thereof being 4500K or less.

In this case, the rider can perform switching between the high-color-temperature light source 21 and the low-color-temperature light source 22, the high-color-temperature light source 21 is used in a common driving environment, and the low-color-temperature light source 22 is used in a driving environment where the view clarity is reduced due to the poor weather. Therefore, a light source with the lower color temperature (such as a yellow light source) may be used as a light source for lighting even in the driving environment where the view clarity is reduced due to the poor weather, so as to improve the view clarity. Thus, while the operation autonomy of switching control to the light sources by the rider, and the miniaturization of the front part of the vehicle and the degree of freedom in designing the vehicle lamps are improved, the front visibility during driving is further ensured.

Preferably, a color temperature difference between the high-color-temperature light source 21 and the low-color-temperature light source 22 is 2000 K or more.

In this case, the rider can perform switching between the high-color-temperature light source 21 and the low-color-temperature light source 22 with a large color temperature difference, the high-color-temperature light source 21 is used in the common driving environment, and the low-color-temperature light source 22 is used in the driving environment where the view clarity is reduced due to the poor weather. Therefore, a light source with the lower color temperature (such as a yellow light source) may be used as a light source for lighting even in the driving environment where the view clarity is reduced due to the poor weather, so as to improve the view clarity. Thus, while the operation autonomy of switching control to the light sources by the rider, the miniaturization of the front part of the vehicle and the degree of freedom in designing the vehicle lamps are improved, the front visibility during driving is further ensured.

The light source switching control method for a straddle-type vehicle 10 of the present invention performs light source switching control on the vehicle lighting unit 2 including the plurality of light sources having different color temperature values, the light source switching control method includes: a light source switching step, setting the light source to be selected by the rider to generate the light source signal value corresponding to the selected light source; a vehicle status detecting step, detecting statuses of the vehicle and generating at least one type of vehicle status information; a light source command outputting determining step, determining whether to output the light source command corresponding to the light source signal value to the vehicle lighting unit 2 based on the vehicle status information; and a light source emitting step, making the selected light source emit light when the vehicle lighting unit 2 receives the light source command.

In this case, in the light source switching control method for a straddle-type vehicle 10 of the present invention, the rider personally sets the light source to be selected from the plurality of light sources having different color temperature values, so as to generate the light source signal value corresponding to the selected light source. Then, whether to output the light source command corresponding to the light source signal value to the vehicle lighting unit 2 is determined according to the detected vehicle status information, and thus, the light source selected by the rider emits light.

According to the light source switching control method for a straddle-type vehicle 10 of the present invention, the rider personally controls switching of the light sources manually, therefore, the rider can personally operate to perform switching control of the vehicle lamps according to perceived view clarity, and then the operation autonomy of switching control to the light source by the rider is enhanced.

Besides, switching of the light sources is manually controlled by the rider personally, so that the alertness of the rider during driving in a region where view clarity is reduced due to the poor weather can be improved, the rider can respond to the road conditions ahead with a sufficient time during driving, and then can adapt to change of the view clarity more quickly, and thus, the front visibility during driving can be ensured.

In addition, in the light source switching control method for a straddle-type vehicle 10 of the present invention, whether to output the light source command corresponding to the light source signal value to the vehicle lighting unit 2 is determined according to the detected vehicle status information, and thus, the light source selected by the rider emits light. That is, even if the rider operates the light source switching element 3, the light source selected by the rider may emit light only when the electronic control unit 5 determines that the light source command corresponding to the light source signal value can be outputted to the vehicle lighting unit 2 based on the vehicle status information. In this case, it is necessary to satisfy a specific vehicle status to switch on the light source selected by the rider to emit light, and thus, the circumstance that switching control between the light emission statuses is automatically performed suddenly during driving to cause trouble of a rider in an opposite vehicle can be avoided, and the front visibility during driving is ensured.

In addition, as described above, according to the light source switching control method for a straddle-type vehicle 10 of the present invention, the rider personally controls switching of the light sources manually, so the purpose may be achieved only by arranging a few parts of the light source switching control apparatus 1 for the vehicle without complicated assembling or large heat dissipation space, the miniaturization of the front part of the vehicle is facilitated, and furthermore, the degree of freedom in designing the vehicle lamps may be increased.

Preferably, in the light source switching control method for a straddle-type vehicle 10 of the present invention, the vehicle status information is status information of a power unit M, and in the light source command outputting determining step, when the status information of the power unit M describes the status where the power unit M stops providing the driving force, the light source command is outputted to the vehicle lighting unit 2, and when the status information of the power unit M describes the status where the power unit M provides the driving force, the light source command is not outputted to the vehicle lighting unit 2.

In this case, the light source command corresponding to the light source signal value may be outputted to the vehicle lighting unit 2 only in the status where the power unit M stops providing the driving force, and thus, the light source selected by the rider emits light. That is, even if the rider switches the light sources, the light source selected by the rider may emit light only in the status where the power unit M stops providing the driving force. In this case, the alertness of the rider during driving in the region where the view clarity is reduced due to the poor weather can be improved, so that the rider can respond to the road conditions ahead with a sufficient time during driving, and can adapt to the change of the view clarity more quickly. In addition, the circumstance that switching control between the light emission statuses is automatically performed suddenly during driving to cause trouble of a rider in an opposite vehicle can be avoided. Thus, while the operation autonomy of switching control to the light sources by the rider, the miniaturization of the front part of the vehicle and the degree of freedom in designing the vehicle lamps are improved, the front visibility during driving is further ensured.

Preferably, in the light source switching control method for a straddle-type vehicle 10 of the present invention, the power unit M is a fuel engine.

In this case, the light source command corresponding to the light source signal value may be outputted to the vehicle lighting unit 2 only in the status where the fuel engine stops providing the driving force, and thus, the light source selected by the rider emits light. That is, even if the rider switches the light sources, the light source selected by the rider may emit light only in the status where the fuel engine stops providing the driving force. In this case, the alertness of the rider during driving in the region where the view clarity is reduced due to the poor weather can be improved, so that the rider can respond to the road conditions ahead with a sufficient time during driving, and can adapt to the change of the view clarity more quickly. In addition, the circumstance that switching control between the light emission statuses is automatically performed suddenly during driving to cause trouble of a rider in an opposite vehicle can be avoided. Thus, while the operation autonomy of switching control to the light sources by the rider, the miniaturization of the front part of the vehicle and the degree of freedom in designing the vehicle lamps are improved, the front visibility during driving is further ensured.

Preferably, in the light source switching control method for a straddle-type vehicle 10 of the present invention, the power unit M is an electric engine.

In this case, the light source command corresponding to the light source signal value may be outputted to the vehicle lighting unit 2 only in the status where the electric engine stops providing the driving force, and thus, the light source selected by the rider emits light. That is, even if the rider switches the light sources, the light source selected by the rider may emit light only in the status where the electric engine stops providing the driving force. In this case, the alertness of the rider during driving in the region where the view clarity is reduced due to the poor weather can be improved, so that the rider can respond to the road conditions ahead with a sufficient time during driving, and can adapt to the change of the view clarity more quickly. In addition, the circumstance that switching control between the light emission statuses is automatically performed suddenly during driving to cause trouble of a rider in an opposite vehicle can be avoided. Thus, while the operation autonomy of switching control to the light sources by the rider, the miniaturization of the front part of the vehicle and the degree of freedom in designing the vehicle lamps are improved, the front visibility during driving is further ensured.

Preferably, in the light source switching control method for a straddle-type vehicle 10 of the present invention, the vehicle status information is vehicle speed status information, and according to the light source command outputting determining step, when the vehicle speed status information describes the status where the vehicle speed is zero, the light source command corresponding to the light source signal value is outputted to the vehicle lighting unit 2, whereby the selected light source emits light, and when the vehicle speed status information describes the status where the vehicle speed is not zero, the light source command corresponding to the light source signal value is not outputted.

In this case, the light source command corresponding to the light source signal value may be outputted to the vehicle lighting unit 2 only in the status where the vehicle speed is zero, and thus, the light source selected by the rider emits light. That is, even if the rider switches the light sources, the light source selected by the rider may emit light only in the status where the vehicle speed is zero. In this case, the alertness of the rider during driving in the region where the view clarity is reduced due to the poor weather can be improved, so that the rider can respond to the road conditions ahead with a sufficient time during driving, and can adapt to the change of the view clarity more quickly. In addition, the circumstance that switching control between the light emission statuses is automatically performed suddenly during driving to cause trouble of a rider in an opposite vehicle can be avoided. Thus, while the operation autonomy of switching control to the light sources by the rider, the miniaturization of the front part of the vehicle and the degree of freedom in designing the vehicle lamps are improved, the front visibility during driving is further ensured.

Preferably, in the light source switching control method for a straddle-type vehicle 10 of the present invention, the plurality of light sources having different color temperature values include: at least one high-color-temperature light source 21, the color temperature value thereof exceeding 4500K; and at least one low-color-temperature light source 22, the color temperature value thereof being 4500K or less.

In this case, the rider can perform switching between the high-color-temperature light source 21 and the low-color-temperature light source 22, the high-color-temperature light source 21 is used in a common driving environment, and the low-color-temperature light source 22 is used in a driving environment where the view clarity is reduced due to the poor weather. Therefore, a light source with the lower color temperature (such as a yellow light source) may be used as a light source for lighting even in the driving environment where the view clarity is reduced due to the poor weather, so as to improve the view clarity. Thus, while the operation autonomy of switching control to the light sources by the rider, the miniaturization of the front part of the vehicle and the degree of freedom in designing the vehicle lamps are improved, the front visibility during driving is further ensured.

Preferably, in the light source switching control method for a straddle-type vehicle 10 of the present invention, a color temperature difference between the high-color-temperature light source 21 and the low-color-temperature light source 22 is 2000K or more.

In this case, the rider can perform switching between the high-color-temperature light source 21 and the low-color-temperature light source 22 with a large color temperature difference, the high-color-temperature light source 21 is used in the common driving environment, and the low-color-temperature light source 22 is used in the driving environment where the view clarity is reduced due to the poor weather. Therefore, a light source with the lower color temperature (such as a yellow light source) may be used as a light source for lighting even in the driving environment where the view clarity is reduced due to the poor weather, so as to improve the view clarity. Thus, while the operation autonomy of switching control to the light sources by the rider, the miniaturization of the front part of the vehicle and the degree of freedom in designing the vehicle lamps are improved, the front visibility during driving is further ensured.

### Embodiments of variations

While the present invention has been described with reference to several embodiments, these embodiments are provided as examples and are not intended to limit the scope of the present invention. These novel embodiments can be implemented in other various ways, and various omissions, substitutions, and changes can be made without departing from the spirit of the present invention. For example, the components of one embodiment may be replaced or changed to the components of another embodiment. These embodiments and variations are included in the scope and spirit of the present invention, and are included in the present invention described in the claims and the equivalent scope thereof.

For example, in above embodiments, the low beam includes a high-color-temperature light source 21 and two low-color-temperature light sources 22, but it is not limited thereto. The low beam only needs to include at least one high-color-temperature light source 21 and at least one low-color-temperature light source 22, may also include a high-color-temperature light source 21 and a low-color-temperature light source 22, or may include two high-color-temperature light sources 21 and a low-color-temperature light source 22, or may include two high-color-temperature light sources 21 and two low-color-temperature light sources 22.

In addition, for example, when a plurality of high-color-temperature light sources 21 are included, the color temperature values of the high-color-temperature light sources 21 may be the same or different.

In addition, for example, when a plurality of low-color-temperature light sources 22 are included, the color temperature values of the low-color-temperature light sources 22 may be the same or different.

In addition, for example, in above embodiments, the high beam 23 is configured at the center of the lower portion of the head lamp, the high-color-temperature light source 21 is configured at the center of the upper portion of the head lamp, and the two low-color-temperature light sources 22 are configured on the left side and the right side of the high-color-temperature light source 21. However, the configuration relationship between the low beam and the high beam in the head lamp of the present invention is not limited thereto. The high beam 23 may also be configured at the center of the upper portion of the head lamp, the high-color-temperature light source 21 is configured at the center of the lower portion of the head lamp, and the two low-color-temperature light sources 22 are configured on the left side and the right side of the high-color-temperature light source 21. In addition, the configuration positions of the light sources may be properly arranged according to the number of the low beams and the number of the high beams.

In addition, for example, in above embodiments, the light source switching element 3 and the high beam and low beam switching element 8 are respectively mounted on the operating handle 11R on the right side and the operating handle 11L on the left side of the straddle-type vehicle 10, but it is not limited thereto. The light source switching element 3 and the high beam and low beam switching element 8 are configured at any positions of the operating handle 11L and the operating handle 11R, and may also be arranged on the same sides of the operating handles.

In addition, for example, in above embodiments, the vehicle status detecting unit 4 includes one detecting unit of a power unit status detecting unit 41 or a vehicle speed detecting unit 42, but it is not limited thereto. The vehicle status detecting unit 4 may also include the power unit status detecting unit 41 and the vehicle speed detecting unit 42 simultaneously.

In addition, for example, the power unit status detecting unit 41 detects the status information of the power unit M and the vehicle speed detecting unit 42 detects the vehicle speed only when the microcontroller unit 51 of the electronic control unit 5 receives the light source signal value from the light source switching element 3, but it is not limited thereto. The status information of the power unit or the vehicle speed may be continuously detected after the vehicle is started, and the status information of the power unit M or the vehicle speed status information is continuously provided to the electronic control unit 5.

In addition, for example, the straddle-type vehicle 10 may have 2 wheels, and may also have 3 wheels or above. For example, the straddle-type vehicle may have 2 front wheels and 1 rear wheel. The straddle-type vehicle is not limited to a scooter-type vehicle, and may be a sport-type vehicle or other vehicles such as a light motorcycle with pedals. Alternatively, the straddle-type vehicle is not limited to a scooter-type vehicle, and may be another vehicle such as a four-wheel off-road vehicle such as an ATV (all terrain vehicle).

## Claims

1. A light source switching control apparatus (1) for a straddle-type vehicle (10), comprising:
a vehicle lighting unit (2), comprising a plurality of light sources (21, 22) having different color temperature values from each other;
a light source switching element (3), configured to be operated by a rider to set the light source (21, 22) to be selected and generate a light source signal value corresponding to the selected light source (21, 22);
a vehicle status detecting unit (4), configured to detect statuses of the vehicle (10) and generate at least one type of vehicle status information; and
an electronic control unit (5), connected to the vehicle lighting unit (2), and configured to receive the light source signal value from the light source switching element (3) and the vehicle status information from the vehicle status detecting unit (4), wherein
the electronic control unit (5) is configured to determine whether to output a light source command corresponding to the light source signal value to the vehicle lighting unit (2) based on the vehicle status information, whereby it is controlled whether to make the selected light source emit light.

2. The light source switching control apparatus (1) for a straddle-type vehicle (10) according to claim 1, wherein
the vehicle status information is status information of a power unit (M),
when the status information of the power unit (M) describes a status where the power unit (M) stops providing driving force, the electronic control unit (5) is configured to output the light source command corresponding to the light source signal value to the vehicle lighting unit (2), whereby the selected light source (21, 22) emits light, and
when the status information of the power unit (M) describes a status where the power unit (M) provides the driving force, the electronic control unit (5) is configured not to output the light source command corresponding to the light source signal value.

3. The light source switching control apparatus (1) for a straddle-type vehicle (10) according to claim 2, wherein
the power unit (M) is a fuel engine.

4. The light source switching control apparatus (1) for a straddle-type vehicle according (10) to claim 2, wherein
the power unit (M) is an electric engine.

5. The light source switching control apparatus (1) for a straddle-type vehicle (10) according to claim 2, wherein
the electronic control unit (5) comprises a plurality of light source driving apparatuses (51, 52),
the electronic control unit (5) is configured to start the light source driving apparatus (51, 52) corresponding to the selected light source (21, 22) based on the received light source signal value from the light source switching element (3),
when the status information of the power unit (M) describes the status where the power unit (M) stops providing the driving force, the started light source driving apparatus (51, 52) is configured to output the light source command corresponding to the light source signal value to the vehicle lighting unit (2), whereby the selected light source (21, 22) emits light, and
when the status information of the power unit (M) describes the status where the power unit (M) provides the driving force, the started light source driving apparatus (51, 52) is configured not to output the light source command corresponding to the light source signal value.

6. The light source switching control apparatus (1) for a straddle-type vehicle (10) according to claim 1, wherein
the vehicle status information is vehicle speed status information,
when the vehicle speed status information describes a status where the vehicle speed is zero, the electronic control unit (5) is configured to output the light source command corresponding to the light source signal value to the vehicle lighting unit (2) so that the selected light source emits light, and
when the vehicle speed status information describes a status where the vehicle speed is not zero, the electronic control unit (5) is configured not to output the light source command corresponding to the light source signal value.

7. The light source switching control apparatus (1) for a straddle-type vehicle (10) according to claim 6, wherein
the electronic control unit (5) comprises a plurality of light source driving apparatuses (51, 52),
the electronic control unit (5) is configured to start the light source driving apparatus (51, 52) corresponding to the selected light source (21, 22) based on the received light source signal value from the light source switching element (3),
when the vehicle speed status information describes the status where the vehicle speed is zero, the started light source driving apparatus (51, 52) is configured to output the light source command corresponding to the light source signal value to the vehicle lighting unit (2), whereby the selected light source (21, 22) emits light, and
when the vehicle speed status information describes the status where the vehicle speed is not zero, the started light source driving apparatus (51, 52) is configured not to output the light source command corresponding to the light source signal value.

8. The light source switching control apparatus (1) for a straddle-type vehicle (10) according to any one of claims 1-7, wherein
the plurality of light sources (21, 22) having different color temperature values comprise:
at least one high-color-temperature light source (21), the color temperature value thereof exceeding 4500K; and
at least one low-color-temperature light source (22), the color temperature value thereof being 4500K or less.

9. The light source switching control apparatus (1) for a straddle-type vehicle (10) according to claim 8, wherein
a color temperature difference between the high-color-temperature light source and the low-color-temperature light source is 2000K or more.

10. A light source switching control method for a straddle-type vehicle (10) performing light source switching control on a vehicle lighting unit (2) comprising a plurality of light sources (21, 22) having different color temperature values from each other, and the light source switching control method comprising:
a light source switching step, setting the light source (21, 22) to be selected by a rider to generate a light source signal value corresponding to the selected light source (21, 22);
a vehicle status detecting step, detecting statuses of the vehicle (10) and generating at least one type of vehicle status information;
a light source command outputting determining step, determining whether to output a light source command corresponding to the light source signal value to the vehicle lighting unit (2) based on the vehicle status information; and
a light source emitting step, making the selected light source (21, 22) emit light when the vehicle lighting unit (2) receives the light source command.

11. The light source switching control method for a straddle-type vehicle (10) according to claim 10, wherein
the vehicle status information is status information of a power unit (M), and
in the light source command outputting determining step, when the status information of the power unit (M) describes a status where the power unit (M) stops providing driving force, the light source command is outputted to the vehicle lighting unit, and when the status information of the power unit describes a status where the power unit (M) provides the driving force, the light source command is not outputted to the vehicle lighting unit (2).

12. The light source switching control method for a straddle-type vehicle (10) according to claim 11, wherein
the power unit (M) is a fuel engine or an electric engine.

13. The light source switching control method for a straddle-type vehicle according to claim 10, wherein
the vehicle status information is vehicle speed status information, and
in the light source command outputting determining step, when the vehicle speed status information describes a status where the vehicle speed is zero, the light source command corresponding to the light source signal value is outputted to the vehicle lighting unit (2), whereby the selected light source (21, 22) emits light, and when the vehicle speed status information describes a status where the vehicle speed is not zero, the light source command corresponding to the light source signal value is not outputted.

14. The light source switching control method for a straddle-type vehicle (10) according to any one of claims 10-13, wherein
the plurality of light sources (21, 22) having different color temperature values comprise:
at least one high-color-temperature light source (21), the color temperature value thereof exceeding 4500K; and
at least one low-color-temperature light source (22), the color temperature value thereof being 4500K or less.

15. The light source switching control method for a straddle-type vehicle (10) according to claim 14, wherein
a color temperature difference between the high-color-temperature light source (21) and the low-color-temperature light source (22) is 2000K or more.
